# FASCICULE DE BREVET EUROPEEN

(11) **EP 2 414 305 B1**
(45) Date de publication et mention de la délivrance du brevet: **16.03.2016**
(21) Numéro de dépôt: 10717696.8
(22) Date de dépôt: 31.03.2010
(51) Int. Cl.: C03C 3/087, C03C 8/00, C04B 41/00, C04B 41/50, C04B 41/86, C04B 41/89, C04B 41/52, F01D 5/28, C23C 4/10, C23C 18/12

(54) **PROCEDE POUR LE LISSAGE DE LA SURFACE D'UNE PIECE EN MATERIAU CMC.**
VERFAHREN ZUM GLÄTTEN DER OBERFLÄCHE EINES TEILS AUS CMC-MATERIAL
PROCESS FOR SMOOTHING THE SURFACE OF A PART MADE OF CMC MATERIAL.

(30) Priorité: 02.04.2009 FR 0952114
(43) Date de publication de la demande: 08.02.2012
(73) Titulaire: HERAKLES, 33185 Le Haillan (FR); Snecma, 75015 Paris (FR)
(72) Inventeur: BOUILLON, Eric, F-33185 Le Haillan (FR); EBERLING-FUX, Nicolas, F-33400 Talence (FR); CHATEIGNER, Serge, F-33600 Pessac (FR)
(74) Mandataire: Desormiere, Pierre-Louis
(86) Numéro de dépôt international: PCT/FR2010/050606
(87) Numéro de publication internationale: WO 2010/112768

(56) Documents cités:
- FR-A1- 2 850 649
- FR-A1- 2 899 226
- US-A- 5 622 751

## Description

### Arrière-plan de l'invention

La présente invention concerne les pièces en matériau composite à matrice céramique. Elle concerne plus particulièrement l'amélioration de l'état de surface de telles pièces.

Dans les moteurs aéronautiques et en particulier dans les turbines à gaz de tels moteurs, les pièces présentant des formes aérodynamiques, comme les aubes, sont habituellement réalisées en alliages métalliques selon un procédé de fonderie et des usinages locaux. Les exigences actuelles et futures en matière de réduction de consommation spécifique, diminution de pollution, etc. dans les moteurs aéronautiques engendrent un accroissement de masse significative pour ces derniers et notamment au niveau des étages basse pression des turbines.

Les aubes constituent une partie importante de la masse des étages basse pression. Afin de réduire de façon significative la masse et admettre des températures de fonctionnement plus élevées que celles autorisées avec les alliages métalliques actuels, une solution serait d'utiliser des matériaux composites à matrice céramique pour la réalisation des aubes.

En effet, les matériaux composites à matrice céramique (CMC) font partie des matériaux composites dits thermostructuraux, c'est-à-dire des matériaux composites ayant des bonnes propriétés mécaniques et une capacité à conserver ces propriétés à température élevée. En outre, des pièces, telles que des aubes, réalisées en CMC présentent un gain de masse significatif par rapport à de mêmes pièces réalisées avec les alliages métalliques habituels.

De façon bien connue, les pièces en CMC sont formées par un renfort fibreux en fibres réfractaires (carbone ou céramique) qui est densifié par une matrice céramique, notamment carbure, nitrure, oxyde réfractaire,.... Des exemples typiques de matériaux CMC sont les matériaux C-SiC (renfort en fibres de carbone et matrice en carbure de silicium), les matériaux SiC-SiC et les matériaux C-C/SiC (matrice mixte carbone/carbure de silicium). La fabrication de pièces en composite CMC est bien connue. La densification du renfort fibreux peut être réalisée par voie liquide (imprégnation par une résine précurseur de la matrice céramique et transformation en céramique par réticulation et pyrolyse, le processus pouvant être répété) ou par voie gazeuse (infiltration chimique en phase vapeur).

Cependant, les pièces en CMC présentent un aspect de surface ondulé et relativement rugueux qui peut s'avérer incompatible avec les performances aérodynamiques requises pour des pièces telles que des aubes. L'ondulation de surface est due au renfort fibreux tandis que la rugosité est liée à la matrice céramique en "seal-coat", en particulier lorsque celle-ci est déposée par infiltration chimique en phase vapeur (CVI).

A l'inverse, les pièces réalisées en alliages métalliques et par les procédés associés présentent un aspect de surface lisse avec une rugosité très faible (de l'ordre de 1 µm).

Une solution pour améliorer l'état de surface d'une pièce en CMC consiste à appliquer à la surface de celle-ci une composition liquide contenant un polymère précurseur de céramique, par exemple du carbure de silicium, et une charge solide réfractaire sous forme de grains permettant de former un revêtement céramique. Ce revêtement céramique permet de gommer les ondulations présentes à la surface de la pièce. Cette étape est suivie d'un dépôt de céramique, par exemple de SiC, formé par infiltration chimique en phase vapeur (CVI) pendant une durée de 30 heures environ qui permet de lier entre eux les grains de la charge réfractaire. Un tel procédé de traitement de surface de pièce en CMC est décrit dans le document US 2006/0141154.

Bien que ce procédé permette d'améliorer significativement l'état de surface d'une pièce en CMC en réduisant les ondulations à 40 µm et la rugosité de surface à des valeurs comprises entre 2 µm et 5 µm (conditionnée par le dépôt de céramique en phase vapeur), la nécessité d'une infiltration chimique par voie gazeuse supplémentaire après la formation du revêtement céramique entraîne une augmentation importante sur le coût et la durée de fabrication de la pièce.

On connaît aussi le document FR 2 899 226 qui décrit une pièce en matériau composite à matrice céramique contenant du silicium protégée contre la corrosion ainsi que le document US 5 622 751 qui décrit des procédés de protection de matériaux composites contre l'oxydation.

Il existe, par conséquent, un besoin pour un revêtement de lissage de surface de pièces en CMC qui est moins pénalisant pour la durée et le coût de fabrication de la pièce. Un tel revêtement de lissage peut être formé par un revêtement vitreux déposé sur la pièce.

Toutefois, le revêtement de lissage vitreux doit remplir plusieurs conditions pour être adapté aux caractéristiques structurelles et fonctionnelles des pièces en CMC. Le revêtement de lissage vitreux doit notamment présenter, au moins lors de son application sur la pièce, une tension de surface ou tension superficielle, ainsi qu'éventuellement une viscosité, adaptées au lissage, c'est-à-dire qui permet un étalement aisé et uniforme du revêtement à la surface de la pièce. Le revêtement de lissage doit en outre avoir un coefficient de dilatation thermique proche de celui du matériau CMC de la pièce afin d'éviter des dilatations différentielles dans la pièce lorsque celle-ci est exposée à de hautes températures. Enfin, le revêtement utilisé doit encore présenter une température de fusion supérieure à la température d'utilisation de la pièce en CMC de manière à assurer l'intégrité du revêtement à cette température qui peut aller jusqu'à 1100°C dans le cas d'aubes de turbines à gaz, par exemple.

### Objet et résumé de l'invention

La présente invention a pour but de proposer un procédé ne présentant pas les inconvénients précités pour l'obtention de pièces en CMC avec un état de surface maîtrisé, notamment compatible avec des applications nécessitant des performances aérodynamiques.

A cet effet, l'invention propose un procédé selon la revendication 1 pour le lissage de surface d'une pièce en matériau composite à matrice céramique présentant une surface ondulée et rugueuse, procédé dans lequel, conformément à l'invention, un revêtement vitreux réfractaire ou composition verrière réfractaire est en outre déposé sur la surface du matériau composite, le revêtement vitreux contenant essentiellement de la silice, de l'alumine, de la baryte et de la chaux.

Ainsi, le procédé permet, par le dépôt d'un revêtement vitreux en surface du matériau CMC, d'améliorer considérablement l'état de surface de la pièce, et ce avec un traitement bien plus rapide et économique qu'une infiltration chimique en phase gazeuse.

Selon une variante de réalisation de l'invention, le procédé comprend, avant le dépôt du revêtement vitreux sur la surface de la pièce, la formation d'un revêtement céramique réalisé par application sur la surface de la pièce d'une composition liquide contenant un polymère précurseur de céramique et une charge solide réfractaire, réticulation du polymère, et transformation du polymère réticulé en céramique par traitement thermique.

Dans ce cas, le dépôt du revêtement vitreux permet en outre de stabiliser et renforcer le revêtement céramique en liant entre eux les grains de la charge solide et/ou les particules du revêtement céramique.

Le revêtement vitreux contient, en pourcentage massique, entre 55% et 70% de silice, entre 5% et 20% d'alumine, entre 5% et 15% de baryte et entre 5% et 10% de chaux.

Le revêtement vitreux peut outre contenir au moins un composé supplémentaire choisi parmi au moins un oxyde alcalino-terreux et un oxyde alcalin.

Selon un aspect de l'invention, le revêtement vitreux présente une température de fusion supérieure ou égale à 1300°C.

Selon un autre aspect, le revêtement vitreux présente un coefficient de dilatation thermique variant au plus de ±0,5 10⁻⁶.K⁻¹ par rapport au coefficient de dilatation thermique du matériau CMC de la pièce.

Le revêtement vitreux peut être déposé sur la pièce par projection à la flamme oxyacétylénique ou projection plasma.

En variante, le revêtement vitreux peut être déposé sur la pièce par enduction, un traitement thermique du revêtement déposé étant ensuite réalisé.

La présente invention vise également une pièce en CMC selon la revendication 9 dont l'état de surface a été amélioré conformément au procédé de l'invention, la surface accessible de la pièce en CMC étant recouverte d'un revêtement vitreux contenant essentiellement de la silice, de l'alumine, de la baryte et de la chaux.

Le revêtement vitreux peut outre contenir au moins un composé supplémentaire choisi parmi au moins un oxyde alcalino-terreux et un oxyde alcalin.

Selon une variante de réalisation de l'invention, la pièce est en outre munie d'un revêtement céramique comprenant une phase céramique et une charge solide.

La pièce peut être notamment une aube pour turbine à gaz.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est vue tridimensionnelle montrant l'état de surface d'une portion d'une pièce en CMC sans traitement supplémentaire de surface,
- la figure 2 est une courbe de mesure des variations dimensionnelles de la portion de pièce de la figure 1,
- la figure 3 est une courbe de mesure des variations dimensionnelles à la surface d'un matériau métallique utilisé pour la réalisation d'aubes de moteur aéronautique,
- la figure 4 est un ordinogramme illustrant des étapes successives de modes de mise en oeuvre d'un procédé conforme à l'invention,
- la figure 5 est une vue en perspective d'une aube de turbomachine.

### Description détaillée de modes de réalisation

La présente invention propose un procédé pour le lissage de surface d'une pièce en matériau composite à matrice céramique (CMC) présentant une surface ondulée et rugueuse.

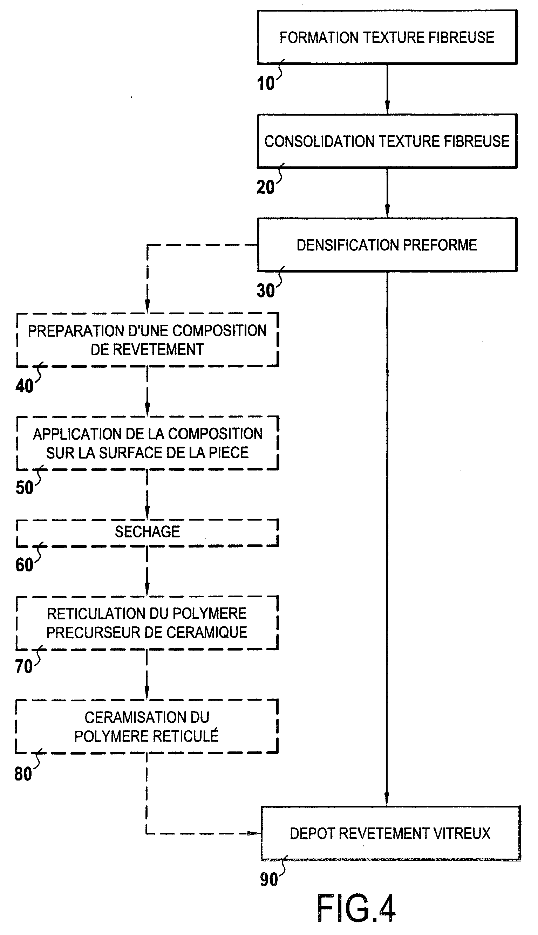

En référence à la figure 4, un procédé de fabrication d'une pièce en CMC, mettant en oeuvre un procédé de lissage conforme à l'invention, comprend les étapes suivantes.

La fabrication d'une pièce en CMC débute par la fourniture d'une structure fibreuse à partir de laquelle sera formée une préforme fibreuse dont la forme est voisine de celle de la pièce à fabriquer (étape 10).

La structure fibreuse peut être sous différentes formes, telles que :
- tissu bidimensionnel (2D),
- tissu tridimensionnel (3D) obtenu par tissage 3D ou multicouches,
- tresse,
- tricot,
- feutre,
- nappe unidirectionnelle (UD) de fils ou câbles ou nappes multidirectionnelle (nD) obtenue par superposition de plusieurs nappes UD dans des directions différentes et liaison des nappes UD entre elles par exemple par couture, par agent de liaison chimique ou par aiguilletage.

On peut aussi utiliser une structure fibreuse formée de plusieurs couches superposées de tissu, tresse, tricot, feutre, nappes ou autres, lesquelles couches sont liées entre elles par exemple par couture, par implantation de fils ou d'éléments rigides ou par aiguilletage.

Les fibres constitutives de la structure fibreuse sont des fibres réfractaires, c'est-à-dire des fibres en céramique, par exemple en carbure de silicium (SiC), des fibres en carbone ou même encore des fibres en un oxyde réfractaire, par exemple en alumine (Al₂O₃).

Une fois constituée, la texture fibreuse est consolidée par imprégnation de cette dernière avec une composition liquide contenant une résine de consolidation précurseur de céramique (étape 20). A cet effet, la texture fibreuse est immergée dans un bain contenant la résine et habituellement un solvant de celle-ci. Après égouttage, un séchage est réalisé en étuve. Le séchage peut être accompagné d'une pré-réticulation ou réticulation partielle de la résine. Une telle pré-réticulation apportant une raideur supplémentaire, elle doit, si elle est réalisée, rester limitée pour préserver une déformabilité suffisante de la texture fibreuse.

D'autres techniques connues d'imprégnation peuvent être utilisées telles que préparation d'un pré-imprégné par passage de la texture fibreuse dans une imprégnatrice en continu, imprégnation par infusion, ou encore imprégnation par RTM ("Resin Transfer Moulding").

La résine de consolidation est choisie pour laisser, après pyrolyse, un résidu céramique suffisant pour assurer la consolidation de la préforme fibreuse réalisée ensuite.

Une résine précurseur de céramique peut être par exemple une résine polycarbosilane précurseur de carbure de silicium (SiC), ou une résine polysiloxane précurseur de SiCO, ou une résine polyborocarbosilazane précurseur de SiCNB, ou une résine polysilazane (SiCN).

Après imprégnation, une préforme fibreuse destinée à constituer le renfort fibreux de la pièce à réaliser, et ayant une forme correspondant sensiblement à celle de cette pièce, est mise en forme par conformation de la texture fibreuse à l'aide d'un outillage de maintien.

La mise en forme de la préforme fibreuse est de préférence accompagnée d'un compactage de la structure fibreuse afin d'augmenter le taux volumique de fibres dans le matériau composite de la pièce à réaliser.

Après mise en forme de la préforme, la réticulation de la résine est réalisée, ou achevée s'il y a eu pré-réticulation, la préforme étant dans un outillage.

Ensuite, la consolidation est achevée par un traitement thermique de pyrolyse de la résine. La pyrolyse est réalisée à une température par exemple d'environ 900°C à 1000°C.

La consolidation peut être également réalisée par infiltration chimique en phase gazeuse (CVI).

Après cette consolidation, la densification de la préforme fibreuse par une matrice céramique est poursuivie (étape 30).

La densification est avantageusement réalisée par infiltration chimique en phase gazeuse (CVI), les paramètres du processus CVI et la nature de la phase gazeuse réactionnelle étant adaptés à la nature de la matrice à former. On peut ainsi enchaîner dans le même four les opérations de pyrolyse de la résine de consolidation et de densification.

La matrice céramique formée par CVI peut être une matrice SiC, ou une matrice au moins en partie auto-cicatrisante, telle qu'une matrice silicium-bore-carbone (Si-B-C) ou une matrice carbure de bore (B₄C) ou encore une matrice séquencée avec des phases de matrices alternées en céramique non cicatrisante et en céramique cicatrisante. On pourra se référer notamment aux documents FR 2 401 888, US 5 246 736, US 5 965 266, US 6 068 930 et US 6 291 058.

La matrice céramique peut être déposée en plusieurs cycles d'infiltration successifs avec entre chaque cycle une opération d'usinage permettant de rouvrir la porosité du matériau en surface et de faciliter le dépôt de la matrice dans le renfort fibreux.

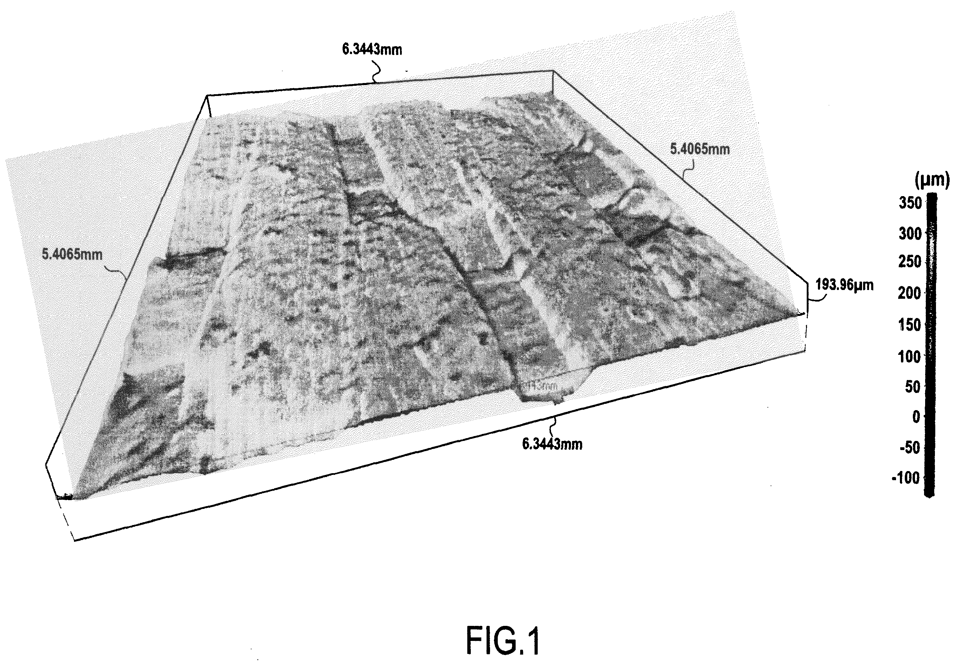

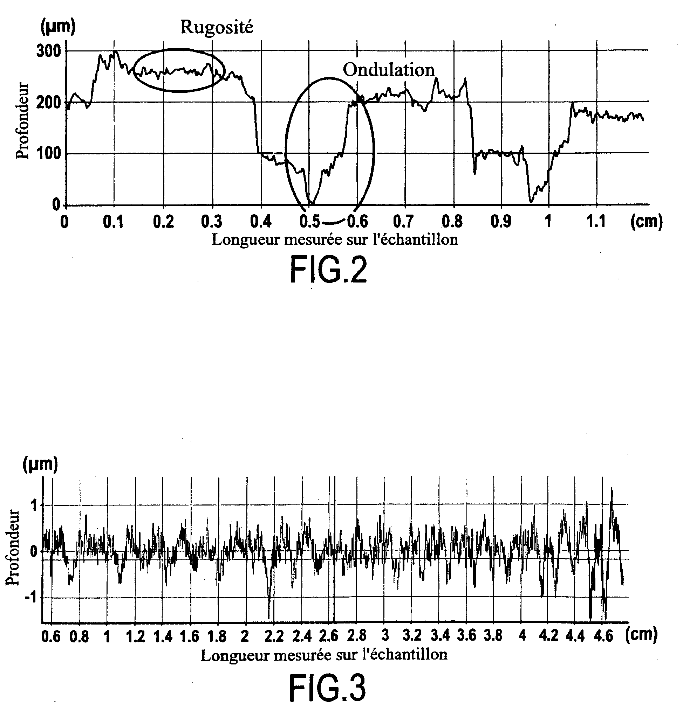

La figure 1 montre l'état de surface d'une portion d'une pièce en CMC réalisée à partir d'une texture fibreuse multicouche de tissage tridimensionnel de fibres de SiC (Guipex® base satin de 8) consolidée, mise en forme et densifiée suivant la méthode décrite ci-dessus. Comme mesurée sur la figure 2, la pièce présente en surface à la fois des ondulations de plus de 200 µm d'amplitude et un niveau de rugosité de l'ordre de 5 µm.

Comme expliqué précédemment, une telle irrégularité de surface ne peut vraisemblablement pas permettre d'utiliser la pièce telle quelle pour des applications aérodynamiques. Par comparaison, la figure 3 montre une mesure de l'état de surface d'une aube d'un étage basse pression d'un moteur aéronautique, celle-ci ayant été réalisée en matériau métallique. On remarque que cette aube ne comporte pas d'ondulation de surface et présente un niveau moyen de rugosité de l'ordre de 1 µm.

A cet effet et conformément à un mode de réalisation de l'invention, on procède à un dépôt d'un revêtement vitreux réfractaire directement sur la surface accessible du matériau CMC de la pièce (étape 90). Par "surface accessible", on entend la surface géométrique externe de la pièce, mais aussi la surface de la porosité interne du matériau qui est débouchante, c'est-à-dire la porosité accessible depuis l'extérieur. Dans le mode de réalisation décrit ici, le revêtement est directement en contact avec le matériau CMC de la pièce.

La composition du revêtement vitreux déposé est choisie de manière à être compatible avec le matériau CMC de la pièce. En particulier, on choisit une composition de revêtement qui présente un coefficient de dilatation thermique qui est relativement proche de celui du matériau CMC, c'est-à-dire qui varie au plus de ±0,5.10⁻⁶ K⁻¹ par rapport au coefficient de dilatation thermique du matériau CMC de la pièce. Le revêtement vitreux présente, par exemple, un coefficient de dilatation thermique compris entre 4.10⁻⁶ K¹ et 5.10⁻⁶ K⁻¹, le coefficient de dilatation thermique du CMC étant généralement compris entre 4 et 4,5. On choisit également une composition de revêtement vitreux qui n'interagit pas chimiquement avec le matériau CMC.

Le revêtement vitreux est en outre choisi en fonction des conditions d'utilisation de la pièce CMC. Il doit en particulier pouvoir résister aux températures d'utilisation de la pièce et présenter une durée de vie au moins égale à celle définie pour la pièce. A cet effet, on choisit un revêtement vitreux ayant une température de fusion supérieure à la température maximale d'utilisation de la pièce. Dans le cas par exemple, de pièces constituant des aubes de turbines à gaz, les températures maximales rencontrées par ces pièces peuvent atteindre 1100°C. Dans ce cas, le revêtement vitreux présente une température de fusion supérieure ou égale à 1300°C.

Le revêtement vitreux contient en pourcentages massiques:
- entre 55% et 70% de silice (SiO₂),
- entre 5% et 20% d'alumine (Al₂O₃),
- entre 5% et 15% de baryte (BaO), et
- entre 5% et 10% de chaux (CaO).

Avec une telle composition, on forme un verre silico-alumineux avec fondants alcalino-terreux qui présente une température de fusion supérieure à 1100°C formant ainsi un revêtement vitreux sur la pièce qui conserve son intégrité jusqu'à des températures d'utilisation pouvant atteindre 1100°C. Avec la composition indiquée ci-avant, le revêtement de lissage vitreux présente, au moins lors de son application sur la pièce, une tension de surface ou tension superficielle, ainsi qu'éventuellement une viscosité, adaptées au lissage, c'est-à-dire qui permet un étalement aisé et uniforme du revêtement à la surface de la pièce. Le revêtement de lissage possède en outre un coefficient de dilatation thermique proche de celui du matériau CMC de la pièce afin d'éviter des dilatations différentielles dans la pièce lorsque celle-ci est exposée à de hautes températures.

La silice représente l'oxyde de base de la composition.

L'alumine, apportée par des matières premières minérales naturelles, permet d'augmenter la température de fusion du verre. Elle permet en outre d'ajuster le coefficient de dilatation thermique et la tension superficielle du verre. En augmentant le pourcentage d'alumine dans la composition du revêtement vitreux, on augmente le coefficient de dilatation thermique et la tension superficielle de ce dernier.

La baryte permet d'ajuster la durée du palier de fusion à haute température du verre, c'est-à-dire la plage de temps sur laquelle s'étend la fusion. Elle permet en outre d'ajuster le coefficient de dilatation thermique, la viscosité et la tension superficielle du verre. En augmentant le pourcentage de baryte dans la composition du revêtement vitreux, on diminue le coefficient de dilatation thermique, la viscosité et la tension superficielle de ce dernier.

La chaux permet d'ajuster la viscosité et la tension superficielle du verre. En augmentant le pourcentage de chaux dans la composition du revêtement vitreux, on diminue le coefficient de dilatation thermique et la viscosité et on augmente la tension superficielle de ce dernier.

Le revêtement vitreux peut en outre contenir un ou plusieurs composés supplémentaires choisis parmi des oxydes alcalino-terreux, tels que la magnésie (MgO) ou la zircone (ZrO₂), et des oxydes alcalins tels que l'oxyde de sodium (Na₂O) et la potasse (K₂O). A titre d'exemple, le revêtement vitreux peut comprendre, en outre de la silice, l'alumine, la baryte et la chaux, entre 0% et 5% de magnésie et/ou entre 0% et 10% de zircone et/ou entre 0% et 5% d'oxyde de sodium.

La magnésie permet d'ajuster la tension superficielle du verre. En augmentant le pourcentage de magnésie dans la composition du revêtement vitreux, on augmente la tension superficielle de ce dernier.

La zircone participe aux propriétés mécaniques du verre. Elle permet également d'ajuster la tension superficielle du verre. En augmentant le pourcentage de zircone dans la composition du revêtement vitreux, on augmente la tension superficielle de ce dernier.

L'oxyde de sodium permet d'ajuster la viscosité et la tension superficielle du verre. En augmentant le pourcentage d'oxyde de sodium dans la composition du revêtement vitreux, on diminue la viscosité et on augmente la tension superficielle de ce dernier.

D'une manière générale, dans ce type de composition verrière, l'emploi d'oxydes alcalino-terreux (baryte, chaux, magnésie, etc.), par rapport aux oxydes alcalins classiques (oxyde de sodium, potasse, etc.), permet de diminuer le coefficient de dilatation thermique pour des températures d'utilisation plus élevées.

Le revêtement vitreux peut être obtenu par dépôt d'une composition de départ et traitement thermique à environ 1350°C, lé traitement thermique pouvant être réalisé simultanément au dépôt ou postérieurement à celui-ci.

La composition de départ peut, par exemple, contenir les matières premières suivantes:
- du sable pour former la silice,
- du kaolin ou de l'argile pour former principalement de l'alumine et, dans une moindre mesure de la silice,
- du carbonate de baryum pour former de la baryte,
- de carbone de calcium pour former de la chaux.

La baryte est formée de préférence à partir de carbonate de baryum afin de former un verre métastable.

Cette composition peut en outre contenir les matières premières supplémentaires suivantes:
- de la stéatite pour former principalement de la magnésie et, dans une moindre mesure, de l'alumine,
- du silicate de zirconium (zircon) pour former de la zircone,
- du feldspath sodique pour former de l'oxyde de sodium.

Les quantités de matières premières sont ajustées dans la composition de départ en fonction des proportions des composants du revêtement vitreux que l'on souhaite obtenir.

A titre d'exemple non limitatif, une première composition de départ contenant en pourcentage massique:
- 39% de sable de silice,
- 9% de kaolin,
- 5% d'argile,
- 10% de carbonate de baryum,
- 7% de carbonate de calcium,
- 2% de stéatite,
- 28% de feldspath,
   permet de former un revêtement vitreux contenant:
- 66% de silice,
- 13% d'alumine,
- 10% de baryte,
- 7% de chaux,
- 1% de magnésie,
- 3% d'oxyde de sodium.

Selon un deuxième exemple, une composition de départ contenant en pourcentage massique:
- 31% de sable de silice,
- 8% de kaolin,
- 5% d'argile,
- 10% de carbonate de baryum,
- 7% de carbonate de calcium,
- 2% de stéatite,
- 10% de silicate de zirconium
- 27% de feldspath,
permet de former un revêtement vitreux contenant:
- 61% de silice,
- 12% d'alumine,
- 10% de baryte,
- 7% de chaux,
- 1% de magnésie,
- 6% de zircone,
- 3% d'oxyde de sodium.

Le revêtement vitreux peut être notamment déposé sur la pièce CMC par projection ou par enduction.

Dans le cas de la projection, on utilise une composition sous forme de poudre (matériau d'apport) qui est projetée sur la pièce de préférence par l'intermédiaire d'une flamme oxyacétylénique ou d'un plasma, ce qui permet de diminuer la température de dépôt sur le matériau et, par conséquent, l'échauffement de la pièce. Les techniques de dépôt par projection à la flamme oxyacétylénique ou plasma sont bien connues et ne seront pas décrites plus en détail par souci de simplification.

Le dépôt par enduction peut être notamment réalisé par pulvérisation, par application d'une barbotine ou par trempage, la composition de départ étant maintenue en suspension dans de l'eau par exemple. Dans ce cas, un traitement thermique doit être appliqué pour fixer le revêtement vitreux sur la pièce. Le traitement thermique est de préférence réalisé localement, c'est-à-dire sans soumettre l'ensemble de la pièce au traitement thermique.

L'épaisseur de la couche de revêtement vitreux déposé est déterminée principalement en fonction du niveau des irrégularités à compenser. La couche de revêtement vitreux présente une épaisseur qui peut être comprise entre 50 µm et 300 µm.

Selon une variante de réalisation de l'invention, un revêtement céramique peut être formé sur la surface accessible de la pièce avant de déposer le revêtement vitreux. Dans ce cas, après formation d'une structure fibreuse (étape 10), consolidation de celle-ci (étape 20) et densification de la préforme (étape 30), une composition de revêtement céramique est préparée (étape 40). Cette composition comprend une charge solide réfractaire sous forme d'une poudre, notamment en céramique, un polymère précurseur de céramique et un solvant éventuel du polymère.

La poudre est par exemple une poudre de SiC. La granulométrie est choisie suffisamment fine pour permettre aux grains de poudre de pénétrer dans la porosité superficielle à combler du matériau composite CMC. De préférence, la taille moyenne des grains est choisie inférieure à 100 microns, par exemple comprise entre 5 microns et 50 microns. On pourra également utiliser des poudres de granulométries différentes. Par exemple, on peut utiliser des grains de taille moyenne comprise entre 5 microns et 15 microns en association avec des grains de taille moyenne comprise entre 25 microns et 50 microns, la proportion en masse de grains de plus grande taille moyenne étant par exemple au moins égale à celle des grains de plus petite taille moyenne.

D'autres-poudres notamment en céramique peuvent être utilisées, ayant sensiblement la même granulométrie, par exemple choisies parmi des poudres de carbure (autre que SiC), nitrure ou borure, des poudres de différentes natures pouvant être mélangées.

Le polymère précurseur de céramique est choisi en fonction de la nature du revêtement désiré. Dans le cas d'un revêtement en SiC, le polymère est choisi par exemple parmi le polycarbosilane (PCS) et le polytitanocarbosilane (PTCS).

D'autres polymères précurseurs de céramique sont utilisables, par exemple des silicones qui sont des précurseurs de SiC (ou SiC+C, avec carbone en excès), des polysilazanes qui, pyrolysés sous un gaz, permettent d'obtenir des résidus à base de Si₃N₄ et/ou de SiC, et des polyborazines, précurseurs de BN.

On notera que la céramique constitutive des charges solides et celle dont le polymère est précurseur sont de préférence, mais non nécessairement, de même nature.

Le solvant est déterminé en fonction du polymère précurseur de céramique utilisé. Dans le cas du PCS, par exemple, le solvant peut être du xylène. D'autres solvants sont utilisables pour d'autres polymères, par exemple l'heptane, l'hexane, le méthyléthylcétone ou l'éthanol pour des silicones.

La quantité de charge solide, par rapport à celle du polymère précurseur de céramique est choisie pour assurer un comblement satisfaisant de la porosité superficielle du matériau composite thermostructural, tout en permettant à la composition de pénétrer sur une certaine profondeur. Ainsi, la quantité en masse de charge solide est de préférence comprise entre 0,4 fois et 4 fois la quantité en masse de polymère précurseur de céramique. Cette plage permet en outre d'ajuster le taux de retrait du polymère précurseur de céramique lors de sa transformation.

La quantité de solvant utilisé est choisie pour conférer la viscosité appropriée à la composition liquide en vue de son application à la surface de la pièce.

A titre d'exemple, une composition typique pour une composition destinée à la formation d'un revêtement SiC peut être choisie dans les limites suivantes :
- Poudre de SiC (granulométrie moyenne comprise entre 5 et 50 microns) : entre 2 et 7 parties en poids;
- PCS (précurseur de SiC) : entre 1 et 3 parties en poids;
- Xylène (solvant du PCS) : entre 2 et 5 parties en poids;

La composition liquide est appliquée sur la surface à traiter de la pièce (étape 50).

L'application peut être simplement réalisée à la brosse, ou pinceau. On pourra utiliser d'autres méthodes, par exemple le pistollettage.

Après séchage (étape 60), par exemple à l'air chaud, pour éliminer le solvant, on procède à la réticulation du polymère précurseur de céramique (étape 70). La réticulation peut être réalisée par traitement thermique. Dans le cas par exemple du PCS, la température est progressivement élevée jusqu'à un palier d'environ 350°C.

Le polymère réticulé est soumis à un traitement thermique aux fins de céramisation (étape 80). Dans le cas du PCS, la transformation en SiC est réalisée en élevant progressivement la température jusqu'à un palier d'environ 900°C.

Plusieurs couches successives de composition liquide peuvent être appliquées. Après application de chaque couche, on procède de préférence au moins au séchage de la composition et à la réticulation du polymère précurseur de céramique. La céramisation peut être réalisée simultanément pour toutes les couches.

Bien entendu, les conditions de réticulation et de céramisation pourront être différentes avec d'autres précurseurs de céramiques, ces conditions ne présentant aucun caractère original.

On obtient alors un revêtement céramique comprenant une phase issue de la céramisation du précurseur de céramique et une charge solide. Ce revêtement comble les ondulations et les creux à la surface de la pièce.

Toutefois, le revêtement céramique ainsi formé doit être stabilisé structurellement. En particulier, il est nécessaire d'assurer une liaison entre les grains de la charge solide en raison du retrait de la résine précurseur de céramique lors de sa transformation. En effet, lors du traitement thermique aux fins de céramisation, il se produit un retrait de matière au niveau du précurseur de céramique entraînant la fissuration ou l'effritement de la céramique. Les grains ne sont alors plus tous liés les uns avec les autres au sein d'un bloc de céramique continu.

A cet effet et conformément à l'invention, on procède au dépôt d'un revêtement vitreux réfractaire sur le revêtement céramique dans les conditions décrites précédemment (étape 60).

Le dépôt d'un revêtement vitreux permet, par la formation d'une matrice vitreuse, de lier les grains et/ou particules du revêtement céramique entre eux. Une telle imprégnation permet également d'accroître la tenue à l'usure de la pièce en CMC (en conditions de frottement homogène).

Le revêtement vitreux est formé de manière à compenser les irrégularités de surface sur le revêtement céramique, la quantité de revêtement vitreux étant choisie en fonction des irrégularités à compenser. La couche de revêtement vitreux présente une épaisseur qui peut être comprise entre 50 µm et 300 µm. La couche ainsi formée permet de lisser la surface du revêtement céramique et, par conséquent, celle de la pièce. Le revêtement vitreux de l'invention permet de réduire le niveau d'ondulations en surface de la pièce à des valeurs inférieures à 40 µm et le niveau de rugosité de surface à des valeurs inférieures à 1 µm.

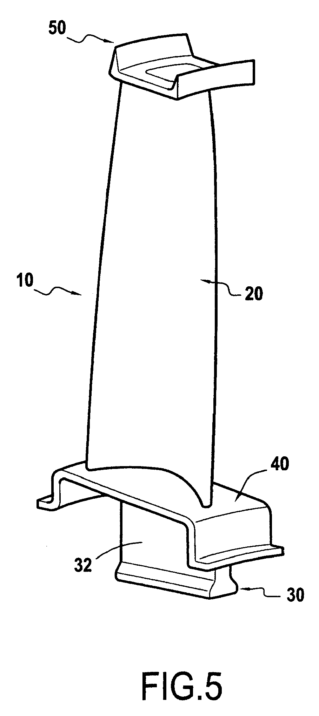

L'invention est applicable à différents types d'aubes de turbomachine, notamment des aubes de compresseur et de turbine de différents corps de turbines à gaz telles que celle illustrée par la figure 5.

L'aube 10 de la figure 5 comprend de façon en soi bien connue, une pale 20, un pied 30 formé par une partie de plus forte épaisseur, par exemple à section en forme de bulbe, prolongé par une échasse 32, une plateforme intérieure 40 située entre l'échasse 32 et la pale 20 et une plateforme extérieure ou talon 50 au voisinage de l'extrémité libre de la pale.

## Revendications

1. Procédé pour le lissage de surface d'une pièce en matériau composite à matrice céramique présentant une surface ondulée et rugueuse,
**caractérisé en ce qu'**un revêtement vitreux réfractaire est en outre déposé directement sur la surface accessible du matériau composite à matrice céramique de la pièce, le revêtement vitreux comprenant, en pourcentage massique, entre 55% et 70% de silice, entre 5% et 20% d'alumine, entre 5% et 15% de baryte (BaO) et entre 5% et 10% de chaux.

2. Procédé selon la revendication 1, **caractérisé en ce qu'**il comprend en outre, avant le dépôt du revêtement vitreux sur la surface de la pièce, la formation d'un revêtement céramique réalisé par application sur la surface de la pièce d'une composition liquide contenant un polymère précurseur de céramique et une charge solide réfractaire, réticulation du polymère, et transformation du polymère réticulé en céramique par traitement thermique.

3. Procédé selon la revendication 1 ou 2, **caractérisé en ce que** la pièce comprend un renfort en fibres de carbone densifié par une matrice à base de silicium.

4. Procédé selon la revendication 3, **caractérisé en ce que** la pièce comprend un renfort en fibres de carbone densifié par une matrice de carbure de silicium.

5. Procédé selon la revendication 1 à 4, **caractérisé en ce que** le revêtement vitreux contient en outre au moins un composé supplémentaire choisi parmi au moins un oxyde alcalino-terreux et un oxyde alcalin.

6. Procédé selon l'une quelconque des revendications 1 à 5, **caractérisé en ce que** le revêtement vitreux est déposé sur la pièce par projection à la flamme oxyacétylénique ou projection plasma.

7. Procédé selon l'une quelconque des revendications 1 à 5, **caractérisé en ce que** le revêtement vitreux est déposé sur la pièce par enduction, un traitement thermique du revêtement déposé étant ensuite réalisé.

8. Procédé selon l'une quelconque des revendications 1 à 7, caractérisé en que la pièce en matériau composite à matrice céramique est une aube de turbine à gaz.

9. Pièce en matériau composite thermostructural comportant un renfort fibreux en fibres réfractaires densifié par une matrice céramique, **caractérisée en ce que** la surface accessible du matériau composite à matrice céramique de la pièce comporte un revêtement vitreux comprenant, en pourcentage massique, entre 55% et 70% de silice, entre 5% et 20% d'alumine, entre 5% et 15% de baryte (BaO) et entre 5% et 10% de chaux.

10. Pièce selon la revendication 9, **caractérisée en ce que** le revêtement vitreux contient en outre au moins un composé supplémentaire choisi parmi au moins un oxyde alcalino-terreux et un oxyde alcalin.

11. Pièce selon la revendication 9 ou 10, **caractérisée en ce qu'**elle comporte en outre un revêtement céramique comprenant une phase céramique et une charge solide.

12. Pièce selon l'une quelconque des revendications 9 à 11, constituant une aube de turbine à gaz.

13. Turbomachine équipée d'une aube selon la revendication 12 ou fabriquée selon le procédé de la revendication 8.

## Patentansprüche

1. Verfahren zum Glätten der Oberfläche eines Teils aus Verbundmaterial mit keramischer Matrix, das eine gewellte und raue Oberfläche aufweist,
**dadurch gekennzeichnet, dass** außerdem ein hitzebeständiger glasartiger Überzug direkt auf die zugängliche Oberfläche des Verbundmaterials mit keramischer Matrix des Teils aufgetragen wird, wobei der glasartige Überzug, in Gewichtsprozent, zwischen 55 % und 70 % Siliciumdioxid, zwischen 5 % und 20 % Aluminiumoxid, zwischen 5 % und 15 % Baryt (BaO) und zwischen 5 % und 10 % Kalk umfasst.

2. Verfahren nach Anspruch 1, **dadurch gekennzeichnet, dass** es außerdem vor dem Auftragen des glasartigen Überzugs auf die Oberfläche des Teils das Bilden eines keramischen Überzugs umfasst, das durch Aufbringen auf die Oberfläche des Teils einer flüssigen Zusammensetzung, die ein Keramikvorläuferpolymer und einen hitzebeständigen festen Füllstoff enthält, durch Vernetzen des Polymers und durch Umwandeln des vernetzten Polymers in Keramik durch Wärmebehandlung erfolgt.

3. Verfahren nach Anspruch 1 oder 2, **dadurch gekennzeichnet, dass** das Teil eine Verstärkung aus Carbonfasern, verdichtet mit einer Matrix auf Siliciumbasis, umfasst.

4. Verfahren nach Anspruch 3, **dadurch gekennzeichnet, dass** das Teil eine Verstärkung aus Carbonfasern, verdichtet mit einer Siliciumcarbidmatrix, umfasst.

5. Verfahren nach Anspruch 1 bis 4, **dadurch gekennzeichnet, dass** der glasartige Überzug außerdem mindestens eine zusätzliche Verbindung enthält, ausgewählt aus mindestens einem erdalkalischen Oxid und einen alkalischen Oxid.

6. Verfahren nach einem der Ansprüche 1 bis 5, **dadurch gekennzeichnet, dass** der glasartige Überzug auf das Teil mittels Sauerstoff-Acetylen-Flammspritzen oder Plasmaspritzen aufgetragen wird.

7. Verfahren nach einem der Ansprüche 1 bis 5, **dadurch gekennzeichnet, dass** der glasartige Überzug auf das Teil durch Beschichten aufgetragen wird, wobei anschließend eine Wärmebehandlung des aufgetragenen Überzugs erfolgt.

8. Verfahren nach einem der Ansprüche 1 bis 7, **dadurch gekennzeichnet, dass** es sich bei dem Teil aus Verbundmaterial mit Keramikmatrix um eine Gasturbinenschaufel handelt.

9. Teil aus einem hochtemperaturbeständigen Verbundmaterial, das eine faserförmige Verstärkung aus hitzebeständigen Fasern, verdichtet mit einer keramischen Matrix, umfasst, **dadurch gekennzeichnet, dass** die zugängliche Oberfläche des Verbundmaterials mit keramischer Matrix des Teils einen glasartigen Überzug umfasst, der, in Gewichtsprozent, zwischen 55 % und 70 % Siliciumdioxid, zwischen 5 % und 20 % Aluminiumoxid, zwischen 5 % und 15 % Baryt (BaO) und zwischen 5 % und 10 % Kalk umfasst.

10. Teil nach Anspruch 9, **dadurch gekennzeichnet, dass** der glasartige Überzug außerdem mindestens eine zusätzliche Verbindung enthält, ausgewählt aus mindestens einem erdalkalischen Oxid und einen alkalischen Oxid.

11. Teil nach Anspruch 9 oder 10, **dadurch gekennzeichnet, dass** es außerdem einen keramischen Überzug umfasst, der eine keramische Phase und einen festen Füllstoff umfasst.

12. Teil nach einem der Ansprüche 9 bis 11, das eine Gasturbinenschaufel darstellt.

13. Strömungsmaschine, die mit einer Schaufel nach Anspruch 12 ausgestattet ist oder gemäß dem Verfahren nach Anspruch 8 hergestellt wird.

## Claims

1. A method of smoothing the surface of a ceramic matrix composite material part that presents a surface that is undulating and rough, the method being **characterized in that** a refractory vitreous coating is also deposited directly on the accessible surface of the part, the vitreous coating containing, in percentages by weight: 55% to 70% silica, 5% to 20% alumina, 5% to 15% baryte (BaO), and 5% to 10% lime.

2. A method according to claim 1, **characterized in that** it further comprises, prior to depositing the vitreous coating on the surface of the part, forming a ceramic coating made by applying a liquid composition to the surface of the part, the liquid composition containing a ceramic precursor polymer and a solid refractory filler, curing the polymer, and transforming the cured polymer into ceramic by heat treatment.

3. A method according to claim 1 or claim 2, **characterized in that** the part comprises carbon fiber reinforcement densified by a silicon-based matrix.

4. A method according to claim 3, **characterized in that** the part comprises carbon fiber reinforcement densified by a silicon carbide matrix.

5. A method according to any one of claims 1 to 4, **characterized in that** the vitreous coating also contains at least one additional compound selected at least from an alkaline-earth oxide and an alkali oxide.

6. A method according to any one of claims 1 to 5, **characterized in that** the vitreous coating is deposited on the part by plasma spraying or oxy-acetylene flame spraying.

7. A method according to any one of claims 1 to 5, **characterized in that** the vitreous coating is deposited on the part by coating, with heat treatment of the deposited coating being performed subsequently.

8. A method according to any one of claims 1 to 7, **characterized in that** the ceramic matrix composite material part is a gas turbine blade.

9. A part made of thermostructural composite material comprising fiber reinforcement made of refractory fibers and densified by a ceramic matrix, the part being **characterized in that** the accessible surface of the part includes a vitreous coating containing, in percentages by weight: 55% to 70% silica, 5% to 20% alumina, 5% to 15% baryte (BaO), and 5% to 10% lime.

10. A part according to claim 9, **characterized in that** the vitreous coating also contains at least one additional compound selected at least from an alkaline-earth oxide and an alkali oxide.

11. A part according to claim 9 or claim 10, **characterized in that** it further includes a ceramic coating comprising a ceramic phase with a solid filler.

12. A part according to any one of claims 9 to 11, constituting a gas turbine blade.

13. A turbomachine including a blade according to claim 12 or fabricated using the method of claim 8.
